# EUROPÄISCHE PATENTANMELDUNG

(11) **EP 3 085 668 A1**
(43) Veröffentlichungstag der Anmeldung: **26.10.2016**
(21) Anmeldenummer: 15164832.6
(22) Anmeldetag: 23.04.2015
(51) Int. Cl.: C01G 53/00, H01M 4/00

(54) **VERFAHREN ZUR HERSTELLUNG EINES KATHODENMATERIALES MIT NIEDRIGER BET-OBERFLÄCHE UND HOHER STAMPFDICHTE**

(71) Anmelder: Evonik Degussa GmbH, 45128 Essen (DE)
(72) Erfinder: KATUSIC, Stipan, 65812 Bad Soden (DE); KRESS, Peter, 63791 Karlstein (DE); WIEGAND, Armin, 63538 Grosskrotzenburg (DE); ALFF, Harald, 63796 Kahl (DE); Hagemann, Michael, 63796 Kahl (DE)

(57) **Zusammenfassung**

Verfahren zur Herstellung eines pulverförmigen Mischoxides A der allgemeinen Formel Li₁₊ₓNiₐCo_{b}Mn_{c})B_{d}O₂ mit 0 < x ≤ 0,5; 0 < a ≤ 1; 0 ≤ b ≤ 1; 0 < c ≤ 1; 0,001 ≤ d ≤ 0,1,
einer BET-Oberfläche von 10 bis 50 m²/g und einer Stampfdichte von 250 bis 700 g/l,
bei dem man
a) eine Lösung bereitstellt, die oxidierbare und/oder hydrolysierbare Metallverbindungen von Lithium, Mangan und/oder Nickel und Borsäure jeweils mit Anteilen entsprechend der allgemeinen Formel,
b) die Lösung mittels eines Zerstäubergases zu einem Aerosol zerstäubt,
c) das Aerosol in einem Reaktionsraum mit einer Flamme zur Reaktion bringt, wobei die Flamme aus einem Gemisch eines Brenngases und Luft erhalten wird und bei der die Gesamtmenge an Sauerstoff mindestens zur vollständigen Umsetzung des Brenngases und der Metallverbindungen ausreicht,
d) den Reaktionsstrom kühlt und anschließend den Feststoff aus dem Reaktionsstrom abtrennt.

Verfahren zur Herstellung eines pulverförmigen Mischoxides B der allgemeinen Formel

Li₁₊ₓNiₐCo_{b}Mn_{c})B_{d}O₂ mit 0 < x ≤ 0,5; 0 < a ≤ 1; 0 ≤ b ≤ 1; 0 < c ≤ 1; 0,001 ≤ d ≤ 0,1,

einer BET-Oberfläche von 0,1 bis 5 m²/g und einer Stampfdichte von 1000 bis 2500 g/l,
bei dem man das pulverförmige Mischoxid A bei Temperaturen von 700 bis 1100°C über einen Zeitraum von 2 bis 36 Stunden thermisch behandelt.

## Beschreibung

Die Erfindung betrifft ein Verfahren zur Herstellung eines Kathodenmateriales mit niedriger BET-Oberfläche und hoher Stampfdichte.

Ein Elektrodenmaterial auf Basis von Lithium-Mischoxiden soll eine hohe Stampfdichte aufweisen, um bei gegebener Energiekapazität das Volumen der Batterie klein halten zu können.

In US2005/106463 wird ein Elektrodenmaterial für eine Lithium-Sekundärbatterie offenbart, das Lithium/Übergangsmetall-Mischoxide und Bor enthält. Das Elektrodenmaterial weist eine spezifische Oberfläche von 0,1 bis 8 m²/g und eine Stampfdichte von 1,6 g bis 3,0 g/cm³ auf. Das Elektrodenmaterial wird hergestellt, indem man ein Gemisch einer Lithium-, Nickel, Mangan- und Cobaltverbindung und Borsäure im gewünschtem stöchiometrischen Verhältnis miteinander mischt, hieraus eine Dispersion in Wasser herstellt, die Dispersion vermahlt bis ein Partikeldurchmesser von 30 µm erreicht ist. Anschließend erfolgt eine Sprühtrocknung. Das so erhaltene Material wird bei erhöhter Temperatur thermisch behandelt. Die Stampfdichte variiert mit der Art der thermischen Behandlung.

Das in US2005/106463 genannte Verfahren umfasst viele Schritte. Es ist bekannt Elektrodenmaterialien auf einfacherem Weg über einen Flammenspraypyrolyse herzustellen.

So ist in WO 2011/160940 ein Verfahren zur Herstellung eines Lithium enthaltenden Mischoxidpulvers offenbart, bei dem man eine Lösung einer Lithiumverbindung und einer Metallverbindung, die als Metallkomponente Ag, Al, B, Ca, Cd, Co, Cr, Cu, Fe, Ga, Ge, In, Mg, Mn, Mo, Nb, Ni, Pd, Rh, Ru, Sc, Sn, Ti, V, Y oder Zn enthält mittels eines Zerstäubergases zu einem Aerosol zerstäubt und in einer Sauerstoff-/Wasserstoffflamme verbrennt.

In der bislang unveröffentlichten europäischen Patentanmeldung 14194628.5 vom 25. November 2014 wird ein pulverförmiges Kathodenmaterial in Form aggregierter Primärpartikel umfassend ein Mischoxidpulver offenbart, welches eine Zusammensetzung entsprechend Li₁₊ₓ(NiₐCo_{b}Mn_{c})D_{d}O₂, sowie H und N als Nichtmetallkomponente, mit einem Anteil an H 0,01 - 0,1 Gew.-% und einem Anteil an N von 0,002 - 0,05 Gew.-% aufweist und bei dem D = Ag, Al, B, Ca, Cr, Cu, Fe, Ga, Ge, In, K, Mg, Mo, Na, Nb, Si, Sn, Ta, Ti, TI, V, und Zr ist und 0 < x ≤ 0,2; 0 < a ≤ 1; 0 ≤ b ≤ 1; 0 ≤ c ≤ 1, 0 ≤ d ≤ 0,2 ist. Es wird hergestellt indem man aus einer Lösung enthaltend eine Lithiumverbindung und wenigstens eine weitere Metallverbindung ausgewählt aus der Gruppe bestehend aus Mn, Ni und Co, ein Ammoniak enthaltendes Aerosol, in einer Hochtemperaturzone zur Reaktion bringt. Prinzipiell sind alle löslichen Dotierverbindungen einsetzbar, die oxidierbar sind. Dabei kann es sich um anorganische Metallverbindungen oder organische Metallverbindungen handeln. Eine besonders bevorzugte Dotierkomponente ist Al. Die Dotierverbindung wird bevorzugt in einer Menge eingesetzt, dass das spätere Kathodenmaterial nicht mehr als 10 Gew.-% an Dotierkomponente enthält, besonders bevorzugt 0,1 bis 5 Gew.-%.

Die mit diesen genannten Verfahren via Flammenspraypyrolyse erhaltenen Pulver stellen brauchbare Elektrodenmaterialien dar. Sie weisen jedoch als Nachteil eine zu niedrige Stampfdichte auf, die nachträglich nicht oder nur durch Verlust von Energiekapazität zu ändern ist. Aufgabe der vorliegenden Erfindung war es daher ein Flammenspraypyrolyse-Verfahren bereitzustellen, welches zu hohen Stampfdichten des Pulvers führt und welches gute elektrochemische Daten aufweist.

Gegenstand der Erfindung ist ein Verfahren zur Herstellung eines pulverförmigen Mischoxides A der allgemeinen Formel Li₁₊ₓ(NiₐCo_{b}Mn_{c})B_{d}O₂
mit 0 < x ≤ 0,5; 0 < a ≤ 1; 0 ≤ b ≤ 1; 0 < c ≤ 1; 0,001 ≤ d ≤ 0,1,
einer BET-Oberfläche von 10 bis 50 m²/g und einer Stampfdichte von 250 bis 700 g/l,
bei dem man
a) eine Lösung bereitstellt, die oxidierbare und/oder hydrolysierbare Metallverbindungen von Lithium, Mangan und/oder Nickel und Borsäure jeweils mit Anteilen entsprechend der allgemeinen Formel,
b) die Lösung mittels eines Zerstäubergases zu einem Aerosol zerstäubt,
c) das Aerosol in einem Reaktionsraum mit einer Flamme zur Reaktion bringt, wobei die Flamme aus einem Gemisch eines Brenngases und Luft erhalten wird und bei der die Gesamtmenge an Sauerstoff mindestens zur vollständigen Umsetzung des Brenngases und der Metallverbindungen ausreicht,
d) den Reaktionsstrom kühlt und anschließend den Feststoff aus dem Reaktionsstrom abtrennt.

Unter Mischoxid ist die innige Vermischung aller Mischoxidkomponenten zu verstehen. Es handelt sich demnach weitestgehend um eine Mischung auf atomarer Ebene, nicht um eine physikalische Mischung von Oxiden. Die Mischoxidpartikel liegen in der Regel in Form von aggregierten Primärpartikeln vor.

Das Verfahren ist besonders geeignet zur Herstellung der Mischoxide A der allgemeinen Formel 0,2 ≤ x ≤ 0,3, 0,1 ≤ a ≤ 0,2; 0,05 ≤ b ≤ 0,2; 0,5 < c ≤ 0,6 und 0,005≤ d ≤ 0,08. Weiterhin ist das Verfahren besonders geeignet zur Herstellung von Mischoxiden A, bei denen wenigstens eine der Bedingungen 1 ≤ a/b ≤ 2; 0,1 ≤ a/c ≤ 0,5; 0,1 ≤ b/c ≤ 0,5; 0,7 ≤ a+b+c ≤ 0,8 und x+a+b+c+d = 1 erfüllt ist.

Es hat sich weiterhin als vorteilhaft erwiesen, Ammoniak in den Reaktionsraum einzubringen. Dies geschieht am einfachsten, wenn Ammoniak Bestandteil des Zerstäubergases ist. Es scheint, dass die Zugabe von Ammoniak auf die Aggregatstruktur der Primärpartikel des Mischoxides A bei der Partikelgenese während der Flammenspraypyrolyse hat und somit bei der anschließenden thermischen Behandlung zu besonders hohen Werten für die Stampfdichte und besonders niedrigen Werten für die BET-Oberfläche führt. Die Konzentration von Ammoniak im Zerstäubergas beträgt bevorzugt 0,01 bis 0,5 kg/Nm³.

Eine weitere bevorzugte Ausführungsform sieht vor, dass innerhalb des Reaktionsraumes die Flamme und das Aerosol teilweise räumlich getrennt voneinander sind. Die räumliche Trennung kann beispielsweise durch eine Glocke erfolgen, die das in den Reaktionsraum eingebrachte Aerosol umgibt. Erst zu einem späteren Zeitpunkt werden die Produkte, die aus der Zündung der Flamme entstehen, im wesentlichen Wasser, und die aus dem Aerosol gebildeten Partikel, das Reaktionsprodukt, zusammengeführt. Die so erhaltenen Partikel weisen bei der nachfolgenden thermischen Behandlung günstige Sintereigenschaften auf.

Die eingesetzte Lösung soll eine möglichst hohe Konzentration aufweisen. Dabei ist ein Optimum zwischen der Produktionsmenge und den Stoffeigenschaften des Pulvers anzustreben. Für das erfindungsgemäße Verfahren kommt man diesen Anforderungen in einem Bereich von 5 bis 20 Gew.-%, bezogen auf die Summe von Li, Ni, Mn, und Co, am besten nach. Die Konzentration der Lösung im Zerstäubergas beträgt bevorzugt 0,1 bis 1 kg/Nm³ und besonders bevorzugt 0,3 bis 0,7 kg/Nm³.

Als Brenngas kann Wasserstoff, Methan, Ethan, Propan, Butan und deren Gemische eingesetzt werden. Bevorzugt wird Wasserstoff eingesetzt.

Das Sauerstoff enthaltende Gas ist in der Regel Luft. Die Menge an Sauerstoff ist bei dem erfindungsgemäßen Verfahren so zu wählen, dass sie mindestens zur vollständigen Umsetzung des Brenngases und aller Metallverbindungen ausreicht. Es ist in der Regel vorteilhaft einen Überschuss an Sauerstoff einzusetzen. Dieser Überschuss wird zweckmäßigerweise ausgedrückt als das Verhältnis von vorhandenem Sauerstoff / Verbrennung des Brenngases notwendiger Sauerstoff und als Lambda bezeichnet. Lambda beträgt bevorzugt 1,1 bis 6,0, besonders bevorzugt 2,0 bis 4,0.

Es ist für die vorliegende Erfindung vorteilhaft, wenn die Metallverbindungen und die Borsäure in einer Lösung vorliegen. Um die Löslichkeit zu Erreichen und um eine geeignete Viskosität für das Zerstäuben der Lösung zu erzielen kann die Lösung erwärmt werden. Prinzipiell sind alle löslichen Metallverbindungen einsetzbar, die oxidierbar sind. Dabei kann es sich um anorganische Metallverbindungen, wie Nitrate, Chloride, Bromide, oder organische Metallverbindungen, wie Alkoxide oder Carboxylate anorganische und/oder organische Metallverbindungen handeln. Als Alkoxide können bevorzugt Ethylate, n-Propylate, iso-Propylate, n-Butylate und/oder tert.-Butylate eingesetzt werden. Als Carboxylate können die der Essigsäure, Propionsäure, Butansäure, Hexansäure, Oxalsäure, Malonsäure, Bernsteinsäure, Glutarsäure, Adipinsäure, Octansäure, 2-Ethyl-Hexansäure, Valeriansäure, Caprinsäure und/oder Laurinsäure zugrundeliegenden Verbindungen eingesetzt werden. In einer bevorzugten Ausführungsform wird wenigstens ein Metallnitrat eingesetzt.

Das Lösungsmittel kann bevorzugt aus der Gruppe bestehend aus Wasser, C₅-C₂₀-Alkanen, C₁-C₁₅-Alkancarbonsäuren und/oder C₁-C₁₅-Alkanolen ausgewählt werden. Besonders bevorzugt kann Wasser oder ein Mischung aus Wasser und einem organischen Lösungsmittel eingesetzt werden. Als organische Lösungsmittel, beziehungsweise als Bestandteil von Gemischen von organischen Lösungsmitteln, können bevorzugt Alkohole wie Methanol, Ethanol, n-Propanol, isoPropanol, n-Butanol oder tert.-Butanol, Diole wie Ethandiol, Pentandiol, 2-Methyl-2,4-pentandiol, C₁-C₁₂-Carbonsäuren wie beispielsweise Essigsäure, Propionsäure, Butansäure, Hexansäure, Oxalsäure, Malonsäure, Bernsteinsäure, Glutarsäure, Adipinsäure, Octansäure, 2-Ethyl-Hexansäure, Valeriansäure, Caprinsäure, Laurinsäure eingesetzt werden. Weiterhin können Benzol, Toluol, Naphtha und/oder Benzin eingesetzt werden. Bevorzugte wird ein wässeriges Lösungsmittel eingesetzt.

Ein weiterer Gegenstand der Erfindung ist ein Verfahren zur Herstellung eines pulverförmigen Mischoxides B der allgemeinen Formel Li₁₊ₓ(NiₐCo_{b}Mn_{c})B_{d}O₂
mit 0 < x ≤ 0,5; 0 < a ≤ 1; 0 ≤ b≤1; 0 < c ≤ 1; 0,001 ≤ d ≤ 0,1,
einer BET-Oberfläche von 0,1 bis 5 m²/g, bevorzugt 0,3 bis 2 m²/g, und einer Stampfdichte von 1000 bis 2500 g/l, bevorzugt 1100 bis 2000 g/l,
bei dem man das pulverförmige Mischoxid A bei 700 bis 1100°C, bevorzugt 800 bis 1000°C, über einen Zeitraum von 2 bis 36 Stunden, bevorzugt 1 bis 10 Stunden, thermisch behandelt.

Somit umfasst die Herstellung des Mischoxides B die Verfahrensschritte zur Herstellung des Mischoxides A. Insgesamt umfasst die Herstellung des pulverförmigen Mischoxides B der allgemeinen Formel Li₁₊ₓ(NiₐCo_{b}Mn_{c})B_{d}O₂
mit 0 < x ≤ 0,5; 0 < a ≤ 1; 0 ≤ b ≤ 1; 0 < c ≤ 1; 0,001 ≤ d ≤ 0,1,
einer BET-Oberfläche von 0,1 bis 5 m²/g, bevorzugt 0,3 bis 2 m²/g, und einer Stampfdichte von 1000 bis 2500 g/l, bevorzugt 1100 bis 2000 g/l, ein Verfahren bei dem man
a) eine Lösung bereitstellt, die oxidierbare und/oder hydrolysierbare Metallverbindungen von Lithium, Mangan und/oder Nickel und Borsäure jeweils mit Anteilen entsprechend der allgemeinen Formel,
b) die Lösung mittels eines Zerstäubergases zu einem Aerosol zerstäubt,
c) das Aerosol in einem Reaktionsraum mit einer Flamme zur Reaktion bringt, wobei die Flamme aus einem Gemisch eines Brenngases und Luft erhalten wird und bei der die Gesamtmenge an Sauerstoff mindestens zur vollständigen Umsetzung des Brenngases und der Metallverbindungen ausreicht,
d) den Reaktionsstrom kühlt und anschließend den Feststoff aus dem Reaktionsstrom abtrennt und
e) den Feststoff bei 700 bis 1100°C, bevorzugt 800 bis 1000°C, über einen Zeitraum von 2 bis 36 Stunden, bevorzugt 1 bis 10 Stunden, thermisch behandelt.

Ein weiterer Gegenstand der Erfindung ist die Verwendung des nach dem erfindungsgemäßen Verfahren hergestellten Mischoxides B als Kathodenmaterial in Lithiumionenbatterien.

### Beispiele

Für die Beispiele 1 bis 7 wird jeweils eine Lösung, die die in der Tabelle 1 genannten Salze und gegebenenfalls Borsäure enthält mit Wasser als Lösungsmittel hergestellt.

Aus der Lösung und Zerstäuberluft wird mittels einer Düse ein Aerosol erzeugt, welches in einen Reaktionsraum zerstäubt wird. Hier brennt eine Knallgasflamme aus Wasserstoff und Luft, in der das Aerosol zur Reaktion gebracht wird. Nach Abkühlung wird der Feststoff an einem Filter von gasförmigen Stoffen abgetrennt.

Der Feststoff wird innerhalb von 3 bis 10 Stunden in einem Drehrohrofen über einen Zeitraum von 4 bis 6 Stunden auf eine Temperatur von 800 bis 960°C erhitzt.

Tabelle 1 nennt alle relevanten Parameter zur Herstellung des Kathodenmateriales, Tabelle 2 nennt wichtige Stoffeigenschaften des Kathodenmateriales. Die Beispiele 1 bis 5 sind erfindungsgemäße Beispiele, die Beispiele 6 und 7 Vergleichsbeispiele.

Die Beispiele zeigen, dass die BET-Oberfläche und die Stampfdichte des Mischoxides A, also aus der Flammenspraypyrolyse, für die erfindungsgemäßen Beispiele 1 - 5 und die Vergleichsbeispiele 6 und 7 ähnlich sind. Während dies auch annähernd für die BET-Oberfläche des Mischoxides B gilt, ist Stampfdichte der nach dem erfindungsgemäßen Verfahren hergestellten Mischoxide B deutlich höher als die der Mischoxide A. Die Stampfdichte der Mischoxide aus den Vergleichsbeispielen hingegen ist vor und nach der Temperung ähnlich. Die Werte für die Stampfdichte für die nach dem erfindungsgemäßen Verfahren hergestellten Pulver sind deutlich am höchsten.

Die elektrochemischen Daten in der Tabelle 2 zeigen, dass die Bordotierung sich nicht nachhaltig auswirkt.

**Tabelle 1: Einsatzstoffe und Reaktionsbedingungen**

| | | **Gemäß Erfindung** | | | | | **Vergleich** | |
|---|---|---|---|---|---|---|---|---|
| **Beispiel** | | **1** | **2** | **3** | **4** | **5** | **6** | **7** |
| x | | 0,2 | 0,26 | 0,25 | 0,2 | 0,2 | 0,2 | 0,2 |
| a | | 0,13 | 0,13 | 0,13 | 0,13 | 0,13 | 0,13 | 0,16 |
| b | | 0,125 | 0,13 | 0,13 | 0,065 | 0,065 | 0,13 | 0 |
| c | | 0,54 | 0,54 | 0,54 | 0,54 | 0,54 | 0,54 | 0,56 |
| D | | B | B | B | B | B | - | Al |
| d | | 0,005 | 0,006 | 0,017 | 0,065 | 0,065 | 0 | 0,08 |
| a/b | | 1,04 | 1 | 1 | 2 | 2 | 1 | - |
| a/c | | 0,24 | 0,24 | 0,24 | 0,24 | 0,24 | 0,24 | 0,29 |
| b/c | | 0,23 | 0,24 | 0,24 | 0,12 | 0,12 | 0,24 | - |
| a+b+c | | 0,8 | 0,8 | 0,8 | 0,74 | 0,74 | 0,8 | 0,72 |
| x/(a+b+c) | | 0,25 | 0,33 | 0,31 | 0,27 | 0,27 | 0,25 | 0,28 |

| **Lösung** | | | | | | | | |
|---|---|---|---|---|---|---|---|---|
| Lithiumnitrat | Gew.-% | 13,3 | 13,6 | 16,3 | 12,5 | 12,5 | 14,9 | 15,7 |
| Nickel(II)nitrat | Gew.-% | 3,8 | 3,7 | 4,5 | 3,6 | 3,6 | 4,1 | 5,5 |
| Mangan(II)nitrat | Gew.-% | 15,6 | 15 | 18,1 | 14,6 | 14,6 | 16,6 | 19 |
| Cobalt(II)nitrat | Gew.-% | 3,7 | 3,7 | 4,5 | 1,8 | 1,8 | 4,1 | - |
| Aluminiumnitrat | Gew.-% | - | - | - | - | - | - | 3,2 |
| Borsäure | Gew.-% | 0,05 | 0,06 | 0,2 | 0,61 | 0,61 | - | - |
| Summe Metall | Gew.-% | 8,6 | 8,4 | 10,1 | 7,6 | 7,6 | 9,3 | 9,6 |
| Durchsatz | kg/h | 7 | 7 | 7 | 7 | 7 | 7 | 8 |
| Zerstäuberluft (ZL) | Nm³/h | 13 | 13 | 11 | 13 | 13 | 13 | 17 |
| NH₃ | kg/h | 1,5 | 1,5 | 1,5 | 1,5 | 1,5 | - | 0,76 |
| Durchsatz/ ZL | kg/Nm³ | 0,54 | 0,54 | 0,64 | 0,54 | 0,54 | 0,54 | 0,47 |
| NH₃/ZL | kg/Nm³ | 0,269 | 0,269 | 0,136 | 0,269 | 0,115 | - | 0,045 |

| **Flammenspraypyrolyse zur Herstellung von Mischoxid A** | | | | | | | | |
|---|---|---|---|---|---|---|---|---|
| Wasserstoff | Nm³/h | 15 | 15 | 17 | 15 | 15 | 15 | 11 |
| Luft | Nm³/h | 93 | 93 | 95 | 93 | 93 | 75 | 75 |
| Lambda | | 2,97 | 2,97 | 2,62 | 2,97 | 2,97 | 2,1 | 2,86 |
| T_{Flamme}^{a)} | °C | 788 | 801 | 815 | 786 | 786 | 783 | 680 |

| **Temperung von Mischoxid A** | | | | | | | | |
|---|---|---|---|---|---|---|---|---|
| T_{Ofen} | °C | 960 | 960 | 960 | 960 | 800 | 930 | 960 |
| t_{Tempern} | h | 6 | 6 | 6 | 6 | 4 | 6 | 6 |

| | | | | | | | | |
|---|---|---|---|---|---|---|---|---|
| a) Flammentemperatur; gemessen 10 cm unterhalb des Einspeisungspunktes von Wasserstoff und Luft in den Reaktionsraum; | | | | | | | | |

**Tabelle 2: BET-Oberfläche, Stampfdichte und elektrochemische Daten der erhaltenen Pulver Li₁₊ₓ(NiₐCo_{b}Mn_{c})D_{d}O₂**

| | | **Gemäß Erfindung** | | | | | **Vergleich** | |
|---|---|---|---|---|---|---|---|---|
| **Beispiel** | | **1** | **2** | **3** | **4** | **5** | **6** | **7** |
| BET Mischoxid A^{a)} | m²/g | 33 | 32 | 23 | 14 | 14 | 39 | 27 |
| BET Mischoxid B^{a)} | m²/g | 1,7 | 1,6 | 1,8 | 0,3 | 1,5 | 6,8 | 4,1 |
| Abnahme BET | % | 95 | 95 | 92 | 98 | 89 | 83 | 85 |
| Stampfdichte Mischoxid A^{b)} | g/l | 334 | 356 | 432 | 517 | 517 | 399 | 471 |
| Stampfdichte Mischoxid B^{b)} | g/l | 1200 | 1093 | 1182 | 1819 | 1284 | 561 | 560 |
| Zunahme Stamfpdichte | % | 259 | 207 | 173 | 251 | 148 | 41 | 19 |

| **Elektrochemische Daten Mischoxid B** | | | | | | | | |
|---|---|---|---|---|---|---|---|---|
| C/10 (2. Zyklus) | mAh/g | 216 | 228 | 224 | 184 | 190 | 202 | 173 |
| C/10 (60. Zyklus) | mAh/g | 207 | 211 | 205 | 184 | 188 | 172 | 177 |
| C3 | mAh/g | 187 | 193 | 189 | 154 | 160 | 151 | 130 |
| 1C | mAh/g | 148 | 148 | 146 | 118 | 121 | 111 | 103 |
| 1st Eff. | % | 72,2 | 71,5 | 71 | 67,5 | 70 | 60 | 64 |
| Fading 1C | mAhg⁻¹/Z | 0,063 | 0,079 | 0,073 | 0,05 | 0,041 | 0,136 | 0,15 |
| C/10 volumetrisch^{c}) | Ah/I | 259,2 | 249,2 | 264,8 | 334,7 | 244,0 | 113,3 | 96,9 |
| 1C volumetrisch | Ah/I | 177,6 | 161,8 | 172,6 | 214,6 | 155,4 | 62,3 | 57,7 |
| 1C/C/10 volumetrisch | % | 68,5 | 64,9 | 65,2 | 64,1 | 63,7 | 55,0 | 59,5 |

| | | | | | | | | |
|---|---|---|---|---|---|---|---|---|
| a) BET-Oberfläche nach DIN ISO 9277; b) Stampfdichte nach DIN EN ISO 787/11; c)Volumenspez. Elektrowert (Ah/l) = Massenspez. Elektrowert (Ah/g) * Stampfdichte (g/l); | | | | | | | | |

## Patentansprüche

1. Verfahren zur Herstellung eines pulverförmigen Mischoxides A der allgemeinen Formel
Li₁₊ₓ(NiₐCo_{b}Mn_{c})B_{d}O₂
mit 0 < x ≤ 0,5; 0 < a ≤ 1; 0 ≤ b ≤ 1; 0 < c ≤ 1; 0,001 ≤ d ≤ 0,1,
einer BET-Oberfläche von 10 bis 50 m²/g und einer Stampfdichte von 250 bis 700 g/l,
bei dem man
a) eine Lösung bereitstellt, die oxidierbare und/oder hydrolysierbare Metallverbindungen von Lithium, Mangan und/oder Nickel und Borsäure jeweils mit Anteilen entsprechend der allgemeinen Formel,
b) die Lösung mittels eines Zerstäubergases zu einem Aerosol zerstäubt,
c) das Aerosol in einem Reaktionsraum mit einer Flamme zur Reaktion bringt, wobei die Flamme aus einem Gemisch eines Brenngases und Luft erhalten wird und bei der die Gesamtmenge an Sauerstoff mindestens zur vollständigen Umsetzung des Brenngases und der Metallverbindungen ausreicht,
d) den Reaktionsstrom kühlt und anschließend den Feststoff aus dem Reaktionsstrom abtrennt.

2. Verfahren nach Anspruch 1, **dadurch gekennzeichnet, dass**
man Ammoniak in den Reaktionsraum einbringt.

3. Verfahren nach Anspruch 2, **dadurch gekennzeichnet, dass**
die Konzentration von Ammoniak im Zerstäubergas 0,01 bis 0,5 kg/Nm³ beträgt.

4. Verfahren nach den Ansprüchen 1 bis 3, **dadurch gekennzeichnet, dass**
innerhalb des Reaktionsraumes die Flamme und das Gemisch wenigstens teilweise räumlich getrennt voneinander sind.

5. Verfahren nach den Ansprüchen 1 bis 4, **dadurch gekennzeichnet, dass**
das Verhältnis von vorhandenem Sauerstoff / Verbrennung des Brenngases notwendiger Sauerstoff 1,1 bis 6 ist.

6. Verfahren nach den Ansprüchen 1 bis 5, **dadurch gekennzeichnet, dass**
die Konzentration der Lösung im Zerstäubergas bevorzugt 0,1 bis 1 kg/Nm³ beträgt.

7. Verfahren zur Herstellung eines pulverförmigen Mischoxides B der allgemeinen Formel
Li₁₊ₓ(NiₐCo_{b}Mn_{c})B_{d}O₂
mit 0 < x ≤ 0,5; 0 < a ≤ 1; 0 ≤ b ≤ 1; 0 < c ≤ 1; 0,001 ≤ d ≤ 0,1,
einer BET-Oberfläche von 0,1 bis 5 m²/g und einer Stampfdichte von 1000 bis 2500 g/l,
bei dem man das pulverförmige Mischoxid A bei Temperaturen von 700 bis 1100°C über einen Zeitraum von 2 bis 36 Stunden thermisch behandelt.

8. Verwendung des nach Anspruch 7 hergestellten Mischoxides B als Kathodenmaterial in Lithiumionenbatterien.
